# EUROPEAN PATENT APPLICATION

(11) **EP 1 992 234 A1**
(43) Date of publication of application: **19.11.2008**
(21) Application number: 08012402.7
(22) Date of filing: 14.09.2001
(51) Int. Cl.: A23L 1/164

(54) **Food product**

(30) Priority: 15.09.2000 GB 0022719
(62) Divisional of application: 01965478.9
(71) Applicant: MARS UK LIMITED, Slough, Berkshire SL1 4LG (GB)
(72) Inventor: Green, David, Berkshire SL1 4LG (GB); Edwards, Damian, Berkshire SL1 4LG (GB); Charalambous, Nicos, Berkshire SL1 4LG (GB); Gilbert, Hannah, Berkshire SL1 4LG (GB)
(74) Representative: Taylor, Gillian Claire

(57) **Abstract**

A crispy savoury snack food product comprising a cereal which is agglomerated by a binder comprising a sugar having low perceived sweetness and 0 to 50% w/w, preferably around 5% w/w of starch or flour.

## Description

The present invention relates to food products, particularly low-fat snack foods containing cereals.

"Snack foods" are food products which are designed to be eaten not as a main or substantial meal, but as snacks in between or as substitute for such meals, for instance when it is inconvenient for eating to interrupt or disrupt other activities. Numerous different types of snack foods, both sweet and savoury, are found in the market.

However, existing snack foods tend to have the disadvantage of a high fat content, leading to a high calorie content. This is because many snack foods require substantial quantities of oil for their preparation, an example being potato crisps, which typically contains around 30-40% fat by weight. Other types of snack foods may contain less oil and may be based on, for example, cereals, nuts or grains or baked thin biscuit-type products. Although these snack foods are generally perceived to be "healthier" than deep-fried snacks, in fact they often contain 10-30% fat by weight or more, and have a substantial calorie content.

According to a first aspect of the present invention, there is provided a crispy savoury snack food product comprising a cereal which is agglomerated by a binder comprising a sugar.

As herein defined, the "sugar" used in the binder can be a monosaccharide, disaccharide, oligosaccharide or polysaccharide, for example a maltodextrin (for example, having between about 10 to about 20 monosaccharide units) or an inulin (for example, having 3 to about 60 monosaccharide units), or can be a sugar alcohol, for example, maltitol, or any food-grade short chain carbohydrate molecule which has adhesive properties in aqueous solution and is capable of forming a brittle matrix under conditions described in the methods of present invention.

In this aspect of the invention, the cereal in the snack food is agglomerated, *i.e*. held together, by means of a binder and then subsequently baked or dried such that the resulting product has enhanced crispiness and crunchiness. Mechanistically, the binder contributes to the crispiness or crunchiness of the snack food, as well as serving to bind the ingredients of the snack food together.

The binder used in the first aspect of the present invention preferably comprises a sugar whose flavour does not interfere substantially with the savoury taste of the ingredients.

Surprisingly, the Inventors have shown that the binding properties of such sugars can provide a savoury snack food by taking advantage of both the low perceived sweetness and the mechanistic properties of certain sugars.

The "sugar" used in the binder may be any one or more types of sugar and may be solid or liquid, refined or unrefined (such raw plant material). Examples include lactose, glucose (in various physical forms, such as powder or syrup), sucrose, granulated sugar, lactose, honey, maple syrup, various types of brown sugar, barley malt, molasses, treacle, sugar alcohol, inulin, fractionated inulin (which is sometimes referred to as "fructo-oligosaccharide"), polydextrose and maltodextrins. Preferably, the sugar used in the binder is a sugar having low perceived sweetness, such as one or more of maltodextrins, inulin, fractionated inulin, low DE glucose, lactose, trehalose, tagatose, xylose, galactose, mannose, arabinose, D-fucose, L-fucose, rhamnose, Actilight®, short-chain fructo-oligosaccharides, biotose, palatinose, IMO, isomaltooligosaccharide, malto-oligosaccharide, cellobiose, gentiobiose, maltose, melibiose, raffinose, panorich, melezitose, Raftiline®, Raftilose®, oligofructose, stachyose, or xylan.

In order to improve the binding together of the cereal ingredients, the binder may contain small amounts of starch or flour, such as wheat flour. Preferably the w/w amount of starch or flour is around 0 to 80%. More preferably it is around 0 to 10%. More preferably it is around 5%.

Preferably the binder has a low viscosity. This is so that the binder mixes in with and coats the cereal readily. The water content of the binder is preferably from 5% to 60% w/w. More preferably it is from 10 % to 50%. More preferably it is from 20% to 40%. More preferably it is around 25%.

The ingredients in the snack food are agglomerated substantially only by the binder. This feature distinguishes the snack food of the present invention from certain snack food products currently on the market, in which the ingredients are held together, and thus integrity of the product achieved, mainly through pressure applied to the ingredients in the preparation process. The property of the binder is such that the ingredients of the snack food may be sufficiently agglomerated through the dried or baked binder alone, and due to the binding property of the sugar, not only may the snack food be shaped without substantial pressure, but it is also possible for it to be shaped without encasing the ingredients in a solid binder. Preferably, the ingredients of the snack food are held together substantially only by the binder and not by encasing the ingredients in a block of the binder. Advantageously, this allows the cereal and other ingredients to be present with the binder in a whole or intact form, rather than in a processed or homogenised state in which the ingredients have been substantially milled or crushed and/or are fully encased by the binder. Thus the cereal and other ingredients are distinguishable to the consumer of the product, which increases the perception of the product as a less processed, natural, macrobiotic or whole food product.

Preferably the w/w ratio of binder: ingredients is in the range of from 70:30 to 50:50. It may be around 70:30; preferably it is around 60:40, more preferably 50:50.

As with the snack food of the first aspect, the snack food of the second aspect may also be presented in a delicate, light-density shape, which may be created through light pressure. Preferably, the snack food has a density of less than 1g/cm³. More preferably it has a density of less than 0.80g/cm³. More preferably it has a density of around 0.60g/cm³ even down to around 0.50g/cm³.

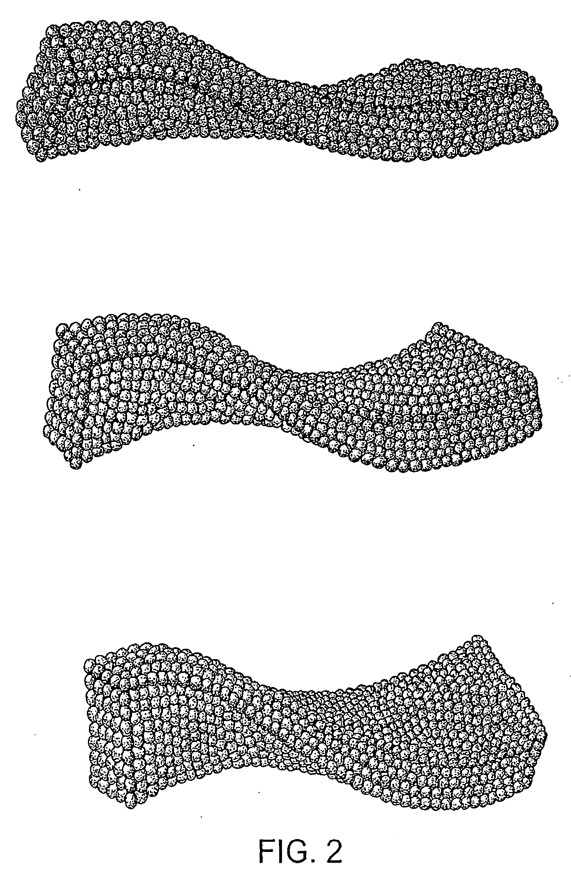

The snack food may be presented in distinct shapes with defined outlines, such as bars, disks, hoops, spiral, twisted rectangles or curls; or it may be presented in bite-size clusters. The snack food may also have the form of hollow shapes or shells, for example, comprising bound cereal clusters as described herein, which are filled with further ingredients for example a flavoured savoury cream or cheese filling, thus providing a more substantial snack. Preferably the snack food has a low density as well as being thin or small in shape. Thus, each individual piece of snack food may weigh, for example, less than around 5g; less than around 3g; less than around 2g; less than around 1.5g. Such a snack food may show aerial gaps, or holes, between the discrete particles of the ingredients, for example as shown in Fig 2.

The snack food is preferably low-fat. Thus, preferably the total fat content of the snack food is less than 15% by weight. The total fat content may be less than 12% by weight; it may be less than 10% by weight. It may be less than 8% by weight or less than 5% by weight, or less than 4% by weight. It may even be effectively 0% or present in only trace amounts. Thus the snack food of the invention may be presented as a low calorie food.

The cereal used in the present invention may be any of one or more kind of grain (or portion of grain, such as fibre) used in food. Examples include oat, wheat, maize, rye, rice, millet and buckwheat. The grain used may be wholegrain or otherwise processed to remove any layers. Before use, the grain may be processed so that it is puffed, extruded, toasted, flaked, powdered, rolled or crushed.

Various forms of wheat may also be used. These include wholegrain or processed wheat, wheat germ, whole wheat flour, and wheat bran. The wheat may be flaked, puffed or toasted. Corn may also be used, including corn meal, toasted maize flakes and popped corn. Oats may also be used, including rolled oats and oat flour. Other types of cereal include barley.

The snack food may also include one or more of the following ingredients:
- one or more legumes, for example soy beans and lentils;
- one or more seeds, such as sesame, sunflower, pumpkin and flax;
- one or more nuts, which may be nibbed, crushed or flaked; suitable nuts include almonds, hazelnuts, brazil nuts, peanuts, pistachio nuts, cashews, walnuts, pine nuts and pecans;
- one or more of various different flavourings, including: salt, pepper (including black pepper), vanilla (or vanillin), caramel flavouring, almond essence, coconut essence, cocoa powder, citrus flavourings (for example, pieces or juice of lemon, orange or lime), cinnamon, nutmeg, ginger, chilli, barbecue flavouring, paprika, vinegar or garlic;
- one or more products derived from milk, such as milk fat, anhydrous milk fat, whey powder and skimmed milk powder, including cheese or cheese products;
- one or more of pieces of vegetables such as tomato pieces, for example sun-dried tomato, pepper pieces, chilli pieces, or fresh or dried herbs such as oregano, sage, or chives.

One or more soluble fibres may also be added to the snack food. Suitable preservatives, colourings, emulsifiers (such as lecithin, particularly obtained from soy), vitamins, minerals, herbal extracts and trace elements may also be added if desired. Other functional ingredients, such as protein concentrates, amino acids and polyunsaturated fatty acids, may also be used. The binder of the snack food may also contain one or more savoury flavouring agents, such as salt, pepper, chilli powder, amino acids, *etc*.

In order to retain crispiness in the end product, the ingredients should be as dry as possible, preferably containing less than 10% moisture. More preferably the ingredients contain less than 8% moisture; more preferably less than 5% moisture; more preferably less than 3% moisture. The finished product preferably has a moisture content of 0 to 10%, more preferably 1 to 8%, more preferably 2 to 4%.

The snack food of the first aspect may be presented in a packet. A single packet may contain a single piece of the snack food of the present invention, or may hold multiple pieces of the snack food. The snack food of this aspect of the invention may be presented in a packet containing a substantial amount of snack food product yet having a low calorific content for example less than 4 kcal/g, preferably less than 3.5 kcal/g.

The crispy savoury snack food product comprising a cereal which is agglomerated by a binder comprising a sugar of the first aspect of the invention can be prepared by a process comprising the steps of:
1. mixing the cereal with the binder;
2. optionally forming a desired shape;
3. heating the mixture at around 100°C to around 200°C.

In the first step of the process, a cereal is mixed with a binder. The preferred composition of the binder is described above in relation to the second aspect of the present invention. The preferred cereal is described above in relation to the first and second aspects of the present invention.

In the second step, the mixture formed by step 1 is optionally formed into a desired shape. For example, the mixture may be rolled into sheets of around 1-5mm thickness and distinct shapes (such as bars, discs, squares, triangles) stamped out. Alternatively, the mixture may be shaped to form a loose sheet which is then broken into bite-size clusters, either in step 2 or at the end of step 3.

In the third step, the shape formed in step 2 is heated. This has the effect of drying the mixture. The heating preferably takes place with air flow. The temperature is between around 100-200°C. Preferably it is around 120-160°C. More preferably it is around 130-140°C. Baked flavours may be developed by the heat.

Flavourings may be added to the binder or to the ingredients before or after step 1 of the process. Preferably flavourings, such as savoury flavourings, are added to the snack food after step 3, preferably when the product surface is still hot.

According to a second aspect of the present invention, there is provided a crispy snack food product comprising a cereal which is agglomerated by a glass of sugar or sugars (hereinafter referred to as 'glass of sugar').

In this aspect, the cereal in the snack food is agglomerated by means of a glass of sugar. The term "glass of sugar" describes a form of sugar obtainable by heating a sugar to a high temperature, for example at least 100°C, followed by cooling. On cooling, the glass of sugar becomes brittle, and thus contributes to the crispiness, or crunchiness, of the snack food. The glass of sugar also serves to bind the ingredients of the snack food together. The ingredients of the snack food thus become "agglomerated", *ie* held together. The glass may contain small amounts of fat to aid mouthfeel, reduce hardness and reduce the perception of dryness.

The "sugar" used for the glass of sugar may be any one or more types of sugar and may be solid or liquid, refined or unrefined (such raw plant material). Examples include lactose, glucose (in various physical forms, such as powder or syrup), sucrose, honey, maple syrup, various types of brown sugar, barley malt, molasses, treacle, sugar alcohol, inulin, fractionated inulin (which is sometimes referred to as "fructo-oligosaccharide"), polydextrose and maltodextrins. Preferably the sugar comprises one or more of the following: glucose syrup, granulated sugar, brown sugar and lactose.

The glass of sugar may also contain certain flavourings (described bellow) and/or small amounts of fat. Any type of multipurpose vegetable/hydrogenated vegetable oil may be included. It reduces the hardness and/or perceived dryness of the product. Preferably, sugar makes up at least 70% by weight of the glass of sugar. More preferably, the percentage by weight of sugar is more than 80%; more preferably more than 85%; more preferably it is more than 90% of the composition of the glass of sugar.

The glass of sugar preferably has less than 10% water content, preferably less than 8%, more preferably 5%, more preferably less than 3% water content, before it is added to the other ingredients for making the snack food.

As with the first aspect of the invention, preferably, the ingredients in the snack food of the present invention are agglomerated substantially only by the glass of sugar (the glass of sugar may contain other ingredients). The binding property of the glass of sugar of the present invention is such that the ingredients of the snack food may be sufficiently agglomerated through the solidified glass of sugar alone. The snack food of the present invention may be pressed into a desired shape, as described below, but the pressure applied to the product may be quite small, because any pressure applied is merely for shaping the food. In other words, integrity, or solidity, of the snack food of may be achieved substantially by virtue of the binding property of the glass of sugar, rather than by application of pressure.

Indeed, the binding property of the glass of sugar is such that the glass of sugar in the snack food need not even form a solid coating of the ingredients. Thus, due to the binding property of the glass of sugar, not only may the snack food be shaped without substantial pressure as described above, but it is also possible for it to be shaped without encasing the ingredients in a solid glass of sugar. This leads to the added advantage of enabling the reduction of sugar content, and hence the reduction of the caloric density of the snack food. Thus, preferably, the ingredients of the snack food are held together substantially only by the glass of sugar and not by encasing the ingredients in a block of the glass of sugar. The glass of sugar may be defined as brittle, clear or opaque in appearance and with no crystallisation.

The proportion of glass of sugar and the ingredients of the snack food affects many aspects of the snack food, including taste, crunchiness or crispiness, appearance and calorie content. A higher proportion of glass of sugar to ingredients would give a product which has higher calorie content by unit volume and higher density; a lower proportion would give the opposite result. As discussed above, it is preferred that the proportion is such that there is a good balance between the sugar content and integrity of the snack food. Preferably the w/w ratio of glass of sugar : ingredients is in the range of from 70:30 to 50:50. It may be around 70:30; preferably it is around 60:40, more preferably 50:50.

As explained above, the glass of sugar in the snack food behaves as a strong binder which holds the ingredients together. This means that it is not necessary to rely on strong pressure, moulding, extrusion etc in order to shape the product. Furthermore, to achieve integrity or solidity, it is not necessary to rely on the ingredients being bound together by an encasement of a solid block of a glass of sugar. For these reasons, the snack food may be presented in a delicate, light-density shape, which may be created through light pressure. Preferably, the snack food of the present invention has a density of less than 1g/cm³. More preferably it has a density of less than 0.80g/cm³. More preferably it has a density of around 0.60g/cm³ even down to around 0.50g/cm³. Traditional types of competitor cereal bar products have typical densities of 0.9-0.95g/cm³.

Preferably the snack food comprises a thin layer of the cereal, for example less than around 1 cm; more preferably less than around 5 mm; more preferably around 2-3 mm.

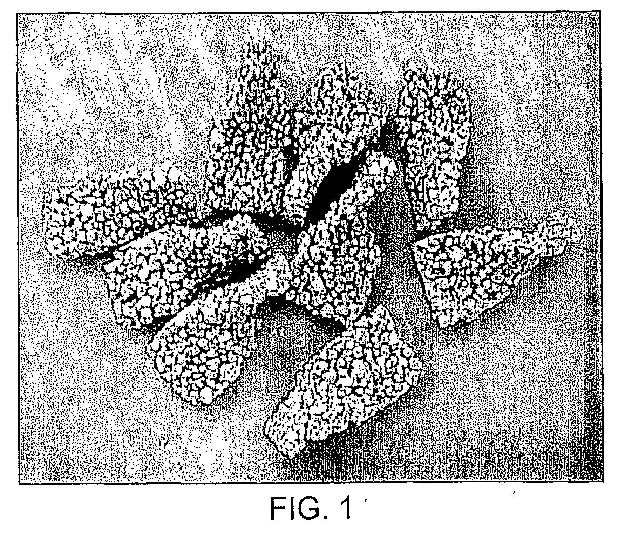

The snack food is preferably presented in distinct shapes with defined outlines, such as disks, hoops, spiral, twisted rectangles, curls or clusters. Preferably the snack food has a low density as well as being thin in shape. Thus, each individual piece of snack food may weigh, for example, less than around 5g; less than around 3g; less than around 2g; less than around 1.5g. Such a snack food may show aerial gaps, or holes, between the discrete particles of the ingredients, for example as shown in Fig 1.

The snack food is preferably low-fat. Thus, preferably the total fat content of the snack food is less than 15% by weight. The total fat content may be less than 12% by weight; it may be less than 10% by weight. It may be less than 8% by weight or less than 5% by weight, or less than 4% by weight. It may even be effectively 0% or present in only trace amounts.

The cereal used may be any of one or more kind of grain (or portion of grain, such as fibre) used in food, as described for the first aspect. Additional ingredients such as legumes, seeds, nuts, dried fruits, cocoa products, one or more of various different flavourings, and one or more products derived from milk, as listed above for the first aspect, may also be used.

Preferably, the major cereal used is rice. The rice is preferably puffed or extruded to give rice having a small diameter of around 1.5-2mm, for example Micro Rice Crispies™, which is particularly preferred to give a thin product. The rice may be wholegrain or otherwise processed. Rice flour may be used. The use of rice as the major cereal can enable the snack food of the invention to have low density, thinness and/or a low "bite height".

The snack food of the second aspect of the present invention may be sweet or savoury.

When the sugar comprising the glass of sugar is sweet-tasting (such as sucrose, glucose etc), it is preferred that the ingredients of the snack food are selected so that their taste do not clash with the sweet taste of the glass of sugar. Suitable ingredients for use with a sweet glass of sugar include one or more dried fruits, such as apricot, strawberry, coconut, apple and sultana or pieces (such as flakes) of cocoa products, chocolate or chocolate-like substances, for example dark chocolate, milk chocolate, white chocolate, carob, cocoa mass and cocoa powder.

Alternatively, a sugar of low perceived sweetness as described herein may be used in the glass of sugar to produce a less sweet, neutral or savoury product. Furthermore, substances which reduce perceived sweetness, such as lactisol, may be included in the snack food. Savoury snacks provided by this aspect of the invention may include as ingredients one or more of (preferably pieces of) vegetables, such as tomatoes, peppers, chillies, onions (any of these may be dried or sun-dried), or fresh or dried herbs such as oregano, sage, chives, etc. or any of the ingredients as listed for the first aspect above.

One or more soluble fibres may also be added to the snack food, such as hydrolysed guar gum, inulin, raftilose and/or retrograded maltodextrins. The inulin (fructo-oligosaccharide), fractionated inulin, maltodextrins *etc* may be in addition to their presence as a 'sugar'. They may be included in the binder of the first aspect of the glass of sugar of the second aspect. Addition of these ingredients may enable marketing of the snack food as having benefits associated with soluble fibres, such as being a "pre-biotic" food. In addition, the snack food may incorporate a "pro-biotic". A "pro-biotic" is defined as a micro-organism which beneficially affects an animal host by improving micro-intestinal balance. Pro-biotics are well known in the art, such as described in EP-A-862 863, WO 92/13462, WO 95/22906, EP-A-0704164 and EP-A-0904 784, all of which are incorporated herein by reference.

Suitable preservatives, colourings, emulsifiers (such as lecithin, particularly obtained from soy), vitamins, minerals, herbal extracts and trace elements may also be added if desired. Other functional ingredients may also be added, including protein concentrates, amino acids and polyunsaturated fatty acids.

In order to retain crispiness in the end product, the ingredients should be as dry as possible, preferably containing less than 10% moisture. More preferably the ingredients contain less than 8% moisture; more preferably less than 5% moisture; more preferably less than 3% moisture.

As with the snack food of the first aspect, the snack food may be presented in a packet. A single packet may contain a single piece of the snack food, or may hold multiple pieces of the snack food. It is preferred that such a packet of the snack food contains an amount of the snack food which provides less than 150 kcal of energy. More preferably, a packet provides less than 120 kcal; more preferably it provides less than 100 kcal.

Preferred features of the first aspect apply *mutatis mutandis* to the second aspect.

According to a third aspect of the present invention, there is provided a process for preparing a crispy snack food product comprising a cereal and a glass of sugar, comprising the steps of:
1. preparing the glass of sugar by heating to at least 100°C;
2. heating a cereal to at least 100 °C;
3. mixing the cereal and the glass of sugar at a temperature of at least 50°C, such that the cereal becomes agglomerated by means of the glass of sugar;
4. obtaining the product of step 3.

In the first step of the process, the glass of sugar is prepared. The preferred composition of the glass of sugar is described above in relation to the first aspect. It mainly comprises one or more types of sugar. The components of the glass of sugar are heated to at least 100°C. The high temperature serves to drive out any excess water in the sugar and controls the water content. The sugars will start the process in solution. The heating drives off the moisture. The sugars will darken and eventually burn if heated too long (time-temperature dependency). Removing moisture can also be achieved by using a partial vacuum and lower temperature. Preferably the temperature is around 110°C, more preferably around 120°C, more preferably around 130°C.

In the second step of the process of the present invention, the cereal of the snack food of the present invention is heated to at least 100°C. Again, it is a time-temperature phenomenon. This step serves to reduce the amount of water in the cereal, as well as to prevent a temperature drop in the glass of sugar when the ingredients of the snack food are added to the glass of sugar. Preferably the temperature to which the cereal is heated is about the same temperature as the glass of sugar, ie at between about 60°C and about 140°C, for example, around 110°C, more preferably around 100°C, more preferably around 80°C. It should be noted that too high a temperature may cause undesirable burning of the ingredients. For this reason, temperatures of more than 200°C should be avoided.

The preferred cereal is described above in relation to the second aspect. The cereal is preferably mixed in this step gently to form a substantially homogenous mixture.

In the third step of the process, the glass of sugar and the cereal are mixed together. Preferably, the mixing is performed such that the integrity of the cereal is substantially retained. Preferably the glass of sugar and the cereal are mixed together to become substantially homogenous, that is such that the glass of sugar is distributed evenly among the ingredients and the ingredients of the snack food becomes coated evenly by the glass of sugar.

The mixing takes place at a temperature of at least 50°C. This is to prevent setting of the glass of sugar, as the glass of sugar generally "sets", i.e. undergoes a glass transition, or becomes brittle at around 50°C. Preferably the mixing occurs at a temperature of at least 60°C. More preferably, it takes place at at least 70°C, more preferably at least 80°C, more preferably at least 90°C, more preferably at least 100°C, more preferably at around 130°C.

In the fourth step of the process, the product of step 3 is obtained. Optionally it is rolled out. Due to the fact that step 3 is carried out at a temperature at which the glass of sugar is pliable, the step of obtaining the product of step 3 (for example rolling out) may be carried out with ease. It should be noted that, once heating of the product stops, the product of step 3 will begin to cool. This will result in setting or "brittling" of the glass of sugar, which may consequently cause difficulty in handling and/or shaping the product. To delay the cooling of the product, the step of rolling out may be carried out on a surface and/or using equipment which have been heated to above 50°C, for example 60°C; 70°C; 80°C; 90°C or 100°C.

As explained above, by virtue of the high binding strength of the glass of sugar, the snack food of the present invention may be rolled out with gentle pressure to a thin layer. The thickness of the layer partly depends on the size of the particles of the ingredients. Preferably the layer is less than around 1 cm; more preferably it is less than around 5 mm; more preferably it is around 2-3 mm. This is not normally achieved by simply adding pressure. The layering should slowly reduce the height eg several rollings of a rolling pin; tamping can also work or a slow feed grooved onto a smooth roller. Once rolled out, the product may be shaped in any suitable manner. The temperature of the snack food may need to be adjusted depending on the manner of shaping. For example, shapes may be stamped out using a stamp or a mould, in which case it is not vital that the temperature of the snack food is above the temperature at which the glass of sugar solidifies, that is, around 50°C. On the other hand, if the shapes are to be twisted or otherwise manipulated to create a 3-dimensional shape, either mechanically or by hand, it may be necessary to maintain the temperature of the snack food above the temperature at which the glass of sugar solidifies, that is, above around 50°C.

After the product is obtained (for example rolled out and shaped), the surface of the snack food may be decorated or coated using, for example, crystalline sugar.

The process of the third aspect of the present invention is particularly useful in preparing a snack food product according to the second aspect.

Preferred features of the first and second aspects apply *mutatis mutandis* to the third aspect.

According to a fourth aspect of the present invention, there is provided the use of a cereal and a glass of sugar in the preparation of a crispy snack food product.

Preferred features of the first to third aspects apply *mutatis mutandis* to the fourth aspect.

According to a fifth aspect of the present invention, there is provided the use of a cereal and a binder comprising a sugar in the preparation of a crispy savoury snack food product.

Preferred features of the first to fourth aspects apply *mutatis mutandis* to the fifth aspect.

The following non-limiting examples are intended to illustrate the present invention, with references to the following drawings:
Figure 1 is a photograph of the "Chocolate Rice Crisp Twist" prepared in Example 1;
Figure 2 is a representation of the "Chocolate Rice Crisp Twist" prepared in Example 1;
Figure 3 shows a plan view and a side view of the "Mediterranean Rice Cracker" prepared in Example 2; and
Figure 4 is a representation of the "Baked Bite-Size Clusters" prepared in Example 5.

### Example 1: Chocolate Rice Crisp Twist

The raw ingredients of the glass of sugar are as shown below in Table 1 under the heading "Raw":

**Table 1**

| | | Raw | | | | Cooked | | |
|---|---|---|---|---|---|---|---|---|
| | % solids | Wet g | % Wet | Dry | % Dry | % Wet | Dry | % Dry |
| Glucose 69DE | 81.5 | 228.39 | 79.00 | 64.39 | 81.69 | 94.22 | 76.79 | 81.69 |
| Granulated sugar | 100.0 | 25.70 | 8.89 | 8.89 | 11.28 | 10.80 | 10.60 | 11.28 |
| Salt | 100.0 | 1.36 | 0.47 | 0.47 | 0.60 | 0.56 | 0.56 | 0.60 |
| GP fat | 100.0 | 9.11 | 3.15 | 3.15 | 4.00 | 3.76 | 3.76 | 4.00 |
| Cocoa mass | 98.6 | 0.00 | 0.00 | 0.00 | 0.00 | 0.00 | 0.00 | 0.00 |
| Cocoa powder | 96.6 | 5.20 | 1.80 | 1.74 | 2021 | 2.15 | 2.07 | 2.21 |
| Lecithin | 99.2 | 0.32 | 0.11 | 0.11 | 0.14 | 0.13 | 0.13 | 0.4 |
| Ethyl vanillin | 100.0 | 0.22 | 0.08 | 0.08 | 0.10 | 0.09 | 0.09 | 0.10 |
| Water | 0.0 | 18.79 | 6.50 | 0.00 | 0.00 | 7.75 | 0.00 | 0.00 |
| Total | | 289.10 | 100.00 | 78.82 | 100.00 | 119.26 | 94.00 | 100.00 |

The glass of sugar was prepared by heating the above ingredients to 130°C [Lab process may take 10 minutes to reach temperature; automated process 1-2 minutes]. The total solid of the cooked glass of sugar was 94.0%. Chocolate Micro Rice Crispies^{™} were heated to 130°C [Just to reach temperature - 3 minutes in a high air flow oven], to 100% dryness. 220g of the heated Chocolate Micro Rice Crispies^{™} were mixed gently with 245.6g of the hot glass of sugar. The mixture was rolled out to a layer of around 4-5mm thickness and cut to pieces of 15mm x 35mm (weight 1.2g) or 15mm x 45mm (weight 1.5g). See Figures 1 and 2.

The snack food of Example 1 has 394.00 kcal per 100g and 1670.49 kJ per 100g. The total fat content is 3.2%.

### Example 2: Mediterranean Rice Cracker

The raw ingredients of the glass of sugar are as shown below in Table 2 below:

**Table 2**

| | % |
|---|---|
| 80% Raftilose solution | 54.88 |
| Olive oil | 7.31 |
| Sea salt | 1.23 |
| Lecithin | 0.61 |
| Lactose | 32.93 |
| Water | 3.04 |
| Total | 100.00 |

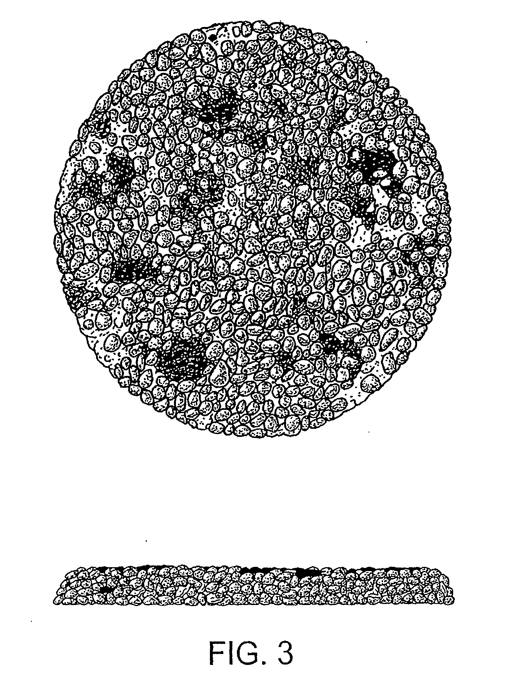

The glass of sugar was prepared by heating the above ingredients to 130°C [Lab process may take 10 minutes to reach temperature; Automated process 1-2 ninutes]. A mixture of around 77% Micro Rice Crispies^{™} and 23% Sun Dried Mix (comprising 45.71% sun-dried tomatoes, 34.29% sun-dried peppers, 8.57% sun-dried chillies and 11.43% dried onions) was heated to 130°C [Just to reach temperature - 3 minutes in a high air flow oven]. The glass of sugar (62.77%) and the mixture of Micro Rice Crispies^{™} and Sun Dried Mix (37.23%) were mixed together gently. The mixture was rolled out to a layer of around 2mm thickness. Disks were cut out using a cutter of 65mm diameter. See Figure 3.

### Example 3: Vanilla & Sesame Rice Crisp

The ingredients of the glass of sugar are indicated in Table 3 below:

**Table 3**

| | g |
|---|---|
| Glucose 69 syrup | 149.5 |
| Lactose | 66.8 |
| Anhydrated milk fat | 28.9 |
| Brown sugar | 22.9 |
| Salt (extra fine) | 3.0 |
| Lecithin | 1.0 |
| Vanillin | 0.3 |
| Water | 16.7 |
| Total | 289.1 |

The glass of sugar was prepared by heating the above ingredients to 130°C [Lab process may take 10 minutes to reach temperature; Automated process 1-2 minutes]. A mixture of around 90% Micro Rice Crispies^{™} and around 10% sesame seeds was heated to 100°C [Just to reach temperature - 3 minutes in a high air flow oven]. The glass of sugar (54.32%) and the mixture of Micro Rice Crispies^{™} and sesame seeds (45.68%) were mixed together gently. The mixture was rolled out to a layer of around 4-5mm thickness and cut to pieces of 15mm x 35mm (weight 1.2g) or 15mm x 45mm (weight 1.5g).

The snack food of Example 3 has 404.00 kcal per 100g and 1747.7 kJ per 100g. Total fat content is 9.10%.

### Example 4: Vanilla & Peanut Rice Crisp

The glass of sugar was prepared by heating the ingredients for the glass of sugar shown in Table 3 of Example 3 to 130°C [Lab process may take 10 minutes to reach temperature; Automated process 1-2 minutes]. A mixture of around 90% Micro Rice Crispies^{™} and around 10% peanut nibs (i.e. peanut pieces) was heated to 100°C [Just to reach temperature - 3 minutes in a high air flow oven]. The glass of sugar (54.32%) and the mixture of Micro Rice Crispies^{™} and peanut pieces (45.68%) were mixed together gently. The mixture was rolled out to a layer of around 4-5mm thickness and cut to pieces of 15mm x 35mm (weight 1.2g) or 15mm x 45mm (weight 1.5g).

The snack food of Example 4 has 401.9 kcal per 100g and 1739.3 kJ per 100g. Total fat content is 8.90%.

### Example 5: Baked Bite-size Clusters

The raw ingredients of the binder are as shown below in Table 4 below:

**Table 4**

| | % |
|---|---|
| Fat | 20.18 |
| Wheat flour | 4.87 |
| Lecithin | 1.18 |
| Maltodextrin (12DE) | 49.62 |
| Salt | 0.24 |
| Savoury powder | 1.00 |
| Water | 22.91 |

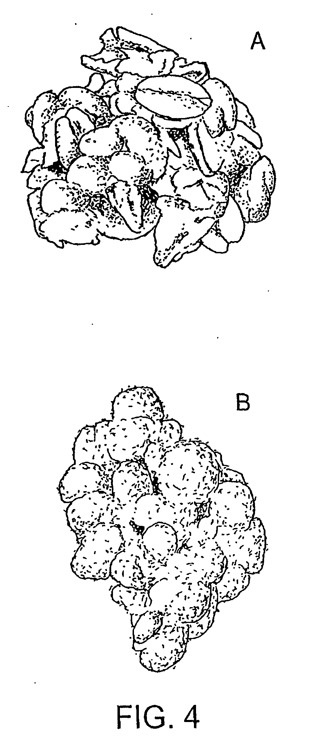

The binder was prepared by mixing the above ingredients. Around 55% Granola mix and 45% binder were mixed together and shaped to form loose sheets. This was then heated at around 130-140°C for around 10 minutes. After the sheets were cooled, it was broken up to form clusters. The water content in the finished product was 2.5%. See Figure 4.

The following numbered paragraphs define the inventions described herein:
1. A crispy savoury snack food product comprising a cereal which is agglomerated by a binder comprising a sugar having low perceived sweetness, such as one or more of maltodextrins, inulin, fractionated inulin, low DE glucose, lactose, trehalose, tagatose, xylose, galactose, mannose, arabinose, D-fucose, L-fucose, rhamnose, short-chain fructo-oligosaccharides, biotose, palatinose, isomaltooligosaccharide, maltooligosaccharide, cellobiose, gentiobiose, maltose, melibiose, raffinose, panorich, melezitose, oligofructose, stachyose, or xylan and 0 to 50% w/w, preferably around 5% w/w of starch or flour.
2. A snack food according to paragraph 1 wherein the water content of the binder is from 5% to 60% w/w.
3. A snack food according to any of paragraphs 1 or 2 wherein sugar comprises at least 70% by weight, or more than 90% by weight of the binder.
4. A snack food according to any of paragraphs 1 to 3 wherein the binder has less than 10% water content, or less than 3% water content before it is added to the other ingredients for making the snack food.
5. A snack food according to any of paragraphs 1 to 4 wherein the ingredients are agglomerated substantially by the binder.
6. A snack food according to any one of paragraphs 1 to 5 wherein the ingredients are not encased in a block of the binder.
7. A snack food according to any of paragraphs 1 to 6 wherein the ratio of binder : ingredients is from around 70: 30 to around 50: 50.
8. A snack food according to any of paragraphs 1 to 7 which has a density of less than 1g/cm³, such as a density of around 0.60g/cm³.
9. A snack food according to any of paragraphs 1 to 8 which is in a distinct shape with a defined outline, such as a bar, disk, hoop, spiral, twisted rectangle, curl, cluster, or a hollow or filled shell.
10. A snack food according to paragraph 9 wherein each shape weighs less than around 5g, or less than around 1.5g.
11. A snack food according to any of paragraphs 1 to 10 which has aerial gaps, or holes, between the discrete particles of the ingredients.
12. A snack food according to any of paragraphs 1 to 11 wherein the total fat content of the snack food is less than 15% by weight, or less than 4% by weight.
13. A snack food according to any of paragraphs 1 to 12 wherein the cereal is one or more of oat, wheat, maize, rye, rice, millet or buckwheat.
14. A snack food according to any of paragraphs 1 to 13 which contains one or more of sesame seeds, sunflower seeds, pumpkin seeds or flax seeds.
15. A snack food according to any of paragraphs 1 to 14 which contains one or more of nuts such as almonds, hazelnuts, brazil nuts, peanuts, pistachio nuts, cashew nuts, walnuts, pine nuts or pecan nuts; one or more of vegetables such as tomato pieces, pepper pieces, or chilli pieces; or one or more fresh or dried herbs such as oregano, sage, or chives.
16. A snack food according to any of paragraphs 1 to 15 which contains one or more types of soluble fibre.
17. A snack food according to any of paragraphs 1 to 16 wherein the ingredients contain less than 10% moisture, or less than 3% moisture.
18. A snack food according to any of paragraphs 1 to 17 in a packet containing single or multiple pieces of the snack food.
19. A crispy snack food product comprising a cereal which is agglomerated by a glass of sugar, wherein sugar comprises at least 70% or more than 90% by weight of the glass of sugar and wherein the snackfood product has a density of 1g/cm³ or less.
20. A snack food according to paragraph 19 wherein the glass of sugar comprises one or more of glucose syrup, granulated sugar, brown sugar or lactose.
21. A snack food according to paragraph 19 or 20 wherein the glass of sugar has less than 10% water content or less than 3% water content before it is added to the other ingredients for making the snack food.
22. A snack food according to any of paragraphs 19 to 21 wherein the ingredients are agglomerated substantially by the glass of sugar.
23. A snack food according to any of paragraphs 19 to 22 wherein the ingredients are not encased in a block of the glass of sugar.
24. A snack food according to any of paragraphs 19 to 23 wherein the ratio of glass of sugar : ingredients is from around 70: 30 to around 50: 50.
25. A snack food according to any of paragraphs 19 to 24 wherein the density is around 0.60g/cm³.
26. A snack food according to any of paragraphs 19 to 25 which comprises a layer of the cereal which is less than around 1 cm thick or less than around 5 mm thick or is around 2-3 mm thick.
27. A snack food according to any of paragraphs 19 to 26 which is in a distinct shape with a defined outline, such as a bar, disk, hoop, spiral, twisted rectangle, curl or cluster.
28. A snack food according to paragraph 27 wherein each shape weighs less than around 5g, or less than around 1. 5g.
29. A snack food according to any of paragraphs 19 to 28 which has aerial gaps, or holes, between the discrete particles of the ingredients.
30. A snack food according to any of paragraphs 19 to 29 wherein the total fat content of the snack food is less than 15% by weight, or less than 4% by weight.
31. A snack food according to any of paragraphs 19 to 29 wherein the cereal is one or more of oat, wheat, maize, rye, puffed or extruded rice, millet, buckwheat, puffed rice, extruded rice, or rice having a diameter of about 1.5-2mm.
32. A snack food according to any of paragraphs 19 to 31 which contains one or more of sesame seeds, sunflower seeds, pumpkin seeds or flax seeds.
33. A snack food according to any of paragraphs 19 to 32 which contains one or more of almonds, hazelnuts, brazil nuts, peanuts, pistachio nuts, cashew nuts, walnuts, pine nuts or pecan nuts.
34. A snack food according to any of paragraphs 19 to 33 which contains one or more of dried apricot, dried strawberry, dried coconut, dried apple or sultana.
35. A snack food according to any of paragraphs 19 to 34 which contains one or more pieces of cocoa products, chocolate or chocolate-like substances, for example dark chocolate, milk chocolate, white chocolate, carob, cocoa mass or cocoa powder.
36. A snack food according to any of paragraphs 19 to 35 which contains one or more of vanillin, lecithin, salt or anhydrous milk fat.
37. A snack food according to any of paragraphs 19 to 36 which contains one or more of pieces of vegetables such as tomato pieces, pepper pieces, chilli pieces, or fresh or dried herbs such as oregano, sage, or chives.
38. A snack food according to any of paragraphs 19 to 37 wherein the sugar in the glass of sugar comprises substantially of lactose and/or maltodextrins.
39. A snack food according to any of paragraphs 19 to 38 which contains one or more types of soluble fibre.
40. A snack food according to any of paragraphs 19 to 39 wherein the ingredients contain less than 10% moisture, or less than 3% moisture.
41. A snack food according to any of paragraphs 19 to 40 in a packet containing single or multiple pieces of the snack food.
42. A snack food according to paragraph 41 wherein the snack food in the packet provides less than 625KJ (150kcal), or less than 419 KJ (100kcal).
43. A process for preparing a crispy savoury snack food product according to any of paragraphs 1 to 18 comprising the steps of:
   1. mixing the cereal with the binder;
   2. optionally forming a desired shape;
   3. heating the mixture at around 100°C to around 200°C.
   4. obtaining the product of step 3.
44. A process according to paragraph 43 wherein the mixture formed by step 1 is formed into a desired shape, such as a loose sheet which is then broken into bite-size clusters, either in step 2 or at the end of step 3.
45. A process according to paragraph 43 wherein the mixture formed by step 1 is rolled into sheets of around 1-5mm thickness and distinct shapes are stamped out.
46. A process according to paragraphs 43 to 45 wherein heating takes place with air flow.
47. A process according to paragraphs 43 to 46 wherein heating takes place at a temperature between around 100° C and around 200° C, or between around120°C and around160°C, or between around 130°C and around 140°C.
48. A process according to paragraphs 43 to 47 wherein flavourings are added to the binder or to the ingredients of said mixture before or after step 1 of the process.
49. A snack food according to any of paragraphs 1 to 42 containing a specific nutritional ingredient in natural, concentrated or synthetic form, which enables a nutritional benefit to be described, described or suggested.

## Claims

1. A crispy savoury snack food product comprising a cereal which is agglomerated by a binder comprising a sugar having low perceived sweetness, such as one or more of maltodextrins, inulin, fractionated inulin, low DE glucose, lactose, trehalose, tagatose, xylose, galactose, mannose, arabinose, D-fucose, L-fucose, rhamnose, short-chain fructo-oligosaccharides, biotose, palatinose, isomaltooligosaccharide, maltooligosaccharide, cellobiose, gentiobiose, maltose, melibiose, raffinose, panorich, melezitose, oligofructose, stachyose, or xylan and 0 to 50% w/w, preferably around 5% w/w of starch or flour.

2. A snack food as claimed in claim 1 wherein the water content of the binder is from 5% to 60% w/w.

3. A snack food as claimed in claim 1 or 2 wherein sugar comprises at least 70% by weight, or more than 90% by weight of the binder.

4. A snack food as claimed in any of claims 1 to 3 wherein the binder has less than 10% water content, or less than 3% water content before it is added to the other ingredients for making the snack food.

5. A snack food as claimed in any of claims 1 to 4 wherein the ingredients are agglomerated substantially by the binder.

6. A snack food as claimed in any one of claims 1 to 5 wherein the ingredients are not encased in a block of the binder.

7. A snack food as claimed in any of claims 1 to 6 wherein the ratio of binder : ingredients is from around 70: 30 to around 50: 50.

8. A snack food as claimed in any of claims 1 to 7 which has a density of less than 1g/cm³, such as a density of around 0.60g/cm³.

9. A snack food as claimed in any of claims 1 to 8 which has aerial gaps, or holes, between the discrete particles of the ingredients.

10. A snack food as claimed in any of claims 1 to 9 wherein the total fat content of the snack food is less than 15% by weight, or less than 4% by weight.

11. A snack food as claimed in any of claims 1 to 10 which contains one or more of nuts such as almonds, hazelnuts, brazil nuts, peanuts, pistachio nuts, cashew nuts, walnuts, pine nuts or pecan nuts; one or more of vegetables such as tomato pieces, pepper pieces, or chilli pieces; or one or more fresh or dried herbs such as oregano, sage, or chives.

12. A snack food as claimed in any of claims 1 to 11 which contains one or more types of soluble fibre.

13. A snack food as claimed in any of claims 1 to 12 wherein the ingredients contain less than 10% moisture, or less than 3% moisture.

14. A snack food as claimed in any of claims 1 to 13 containing a specific nutritional ingredient in natural, concentrated or synthetic form, which enables a nutritional benefit to be described, claimed or suggested.
